# EUROPEAN PATENT SPECIFICATION

(11) **EP 2 063 355 B1**
(45) Date of publication and mention of the grant of the patent: **20.09.2017**
(21) Application number: 07254548.6
(22) Date of filing: 22.11.2007
(51) Int. Cl.: G06F 9/38, G06F 9/32

(54) **Branch prediction method**
Zweigstellenvorhersageverfahren
Procédé de prédiction de branche

(43) Date of publication of application: 27.05.2009
(73) Proprietor: Sony Interactive Entertainment Europe Limited, London W1F 7LP (GB)
(72) Inventor: Simon Hall c/o Sony Computer Entertainment Europe Limited, London W1F 7LP (GB)
(74) Representative: D Young & Co LLP

(56) References cited:
- WO-A-00/67116
- US-A- 4 435 756
- US-A- 5 857 104
- PATTERSON J R C: "ACCURATE STATIC BRANCH PREDICTION BY VALUE RANGE PROPAGATION" ACM SIGPLAN NOTICES, ACM, ASSOCIATION FOR COMPUTING MACHINERY, NEW YORK, NY, US, vol. 30, no. 6, 1 June 1995 (1995-06-01), pages 67-78, XP000528306 ISSN: 0362-1340
- FISHER J A ET AL: "PREDICTING CONDITIONAL BRANCH DIRECTIONS FROM PREVIOUS RUNS OF A PROGRAM" ACM SIGPLAN NOTICES, ACM, ASSOCIATION FOR COMPUTING MACHINERY, NEW YORK, NY, US, vol. 27, no. 9, 1 September 1992 (1992-09-01), pages 85-95, XP000330592 ISSN: 0362-1340

## Description

The present invention relates to an apparatus and method of branch prediction.

In operation, microprocessors receive program instructions that must be decoded before they are executed. To improve efficiency, the microprocessor can be arranged to have parallel execution and decoding means, so that the next instruction is being decoded whilst the current instruction is being executed.

In modem microprocessors, the decoding process can be complex, and so the parallelism of the decoder has expanded to create a so-called 'pipeline architecture' in which program instructions are decoded step-by-step in an assembly-line fashion.

A typical pipeline may comprise 20 stages, and hence may look 20 instructions ahead for input.

A problem occurs, however, if the currently executed instruction is a branch instruction, such as for example an IF statement in an IF(TRUE) THEN *Do_X* ELSE *Do_Y* construct. Depending on the outcome of the IF statement, a jump to a new position within the instruction sequence may need to be executed. For example, if the IF condition is true, then typically no jump occurs as the code *Do X* corresponding to the true outcome is used. However, if the IF condition is false, then instead a jump occurs to bypass the 'true' outcome and execute the code *Do Y* corresponding to the false outcome.

As a result, if the pipeline is decoding physically subsequent instructions associated with *Do X*, but in fact the alternative code *Do Y* is chosen upon execution of the IF statement, then the pipeline has to be flushed out and the alternative instructions decoded - in the case of a 20 stage pipeline, this will cost 20 clock cycles.

To mitigate this problem, software compilers implement so-called 'branch prediction'. Branch prediction attempts to determine - in advance of executing the branch instruction - which outcome will be selected. The pipeline is then fed accordingly. This reduces the frequency with which the pipeline has to be flushed, and hence increases efficiency.

Branch prediction has two basic forms; static and dynamic. Static branch predictors effectively modify the potential execution order of a program prior to its execution, whereas dynamic branch predictors observe a program during execution and then modify the execution order reactively. Typically both types of predictions are implemented in hardware as part of the decoding architecture, and store any volatile information either in dedicated registers or in the processor's level 2 cache.

Static branch prediction is typically suitable for looped conditional structures such as *For* loops or *repeat..until* loops (*For* loops place the branch evaluation step at the start of the loop, whilst *repeat..until* loops place the branch evaluation at the end). For example, the loop:

```
                           i=1;
                           Repeat
                             Print 'A'; i++;
                           Until i==99;
                           Print 'B';
```

will result in 99 A's followed by a B. Therefore a static branch prediction that the instruction following the evaluation of the variable 'i' will be Print 'A' rather than the next literal instruction in the program (Print 'B') is 99% accurate in this instance.

A program compiler will identify such loop structures and provide a static prediction based upon the code. This is typically a 1 or 0, signifying an expected 'true' or 'false' evaluation of the condition (known as a 'hint' bit), but could optionally be the relative memory address of the expected next instruction or some other indication of outcome.

In Joseph A. Fisher & Stephan M. Freudenberger, "Predicting Conditional Branch Directions From Previous Runs of a Program", Proceedings of the fifth international conference on Architectural support for programming languages and operating systems (ASPLOS-V), Boston, Massachusetts, USA, 1992, Pages: 85 - 95, ISBN:0-89791-534-8, branch behaviour is monitored during runs of a program, and this behaviour is then used to generate static branch predictions for the program.

In contrast to static branch prediction, dynamic branch prediction is more suitable for unstructured conditions such as 'IF' statements. Dynamic branch predictors generally take the form of simple state machines, with one state machine for each branch that is predicted.

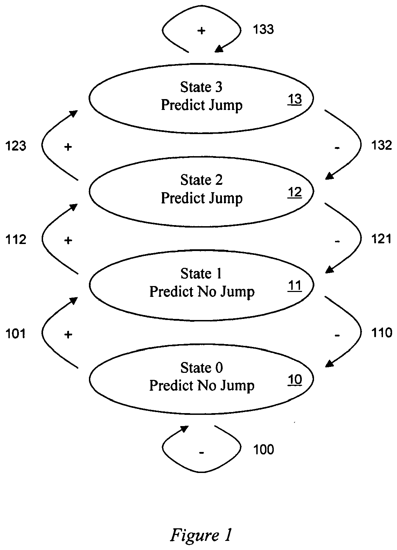

Referring now to Figure 1, an example dynamic branch predictor comprises four states 10, 11, 12, 13. The first, or bottom (as drawn), two states 10, 11 predict that the branch will not jump (e.g. corresponding to IF(TRUE) THEN *Do_X* ) The latter, or top, two states 12, 13 predict that the branch will jump (e.g. corresponding to IF(FALSE) ELSE *Do Y*)*.*

If a jump actually occurs, the state machine implements one upward state transition 101, 112, 123, saturating if already in the top state (13, 133). If a jump does not occur, the state machine implements one downward state transition 132, 121, 110, saturating if already in the bottom state (10, 100).

The general result of this state machine is that a branch selection must deviate from current expectation twice before the branch prediction changes. Thus the predictor is dynamic, but has hysteresis. The state machine requires 2 bits of memory to represent its four states. For the above arrangement of states, the most significant bit of the state machine can be used as the hint bit for the processor pipeline.

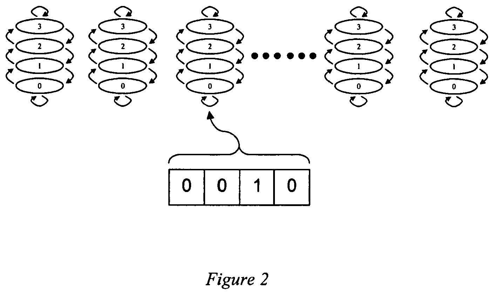

Referring now to Figure 2, a more powerful dynamic branch predictor comprises for example sixteen state engines of the type shown in Figure 1. In addition, a four-bit branch history is maintained using a shift register, with a 0 signifying no branch (no jump within the code sequence) and a 1 signifying a branch (jump).

Then, the binary number created by the four-bit history is used to select the corresponding one of the sixteen state engines. As a result, respective state engines can specialise in predicting branches characterised by the pattern of the four preceding decisions of that branch. Depending on the nature of the pattern, this system can learn to predict branch decision patterns up to a period of 16. A branch predictor of this type requires 36 bits of memory. The most significant bit of the state machine referenced by the branch history can act as the hint bit.

The determination of a predictive state based upon an observed history of branch decisions is also possible using more complex state machines, such as hidden Markov models and neural networks. However, the computational cost, and more significantly the latency of their computation with respect to the pipeline length, limit the practical predictive power of these approaches.

It will be appreciated that additional branch prediction techniques may also be of benefit, particularly in circumstances where the performance of the above techniques is limited. Embodiments of the present invention aim to provide such further branch prediction techniques.

US 5857104 discloses setting a static branch prediction based on observing branch bias. WO 00/67116 discloses a dual system with a static branch predictor and a dynamic branch predictor. Where a compiler generates a 'strong' static hint, this prevents use of the dynamic predictor. Patterson, J.R.C., 'Accurate static branch prediction by value range from propagation', ACM Sigplan Notices, ACM, Association for computing machinery, New York, NY, US, Vol. 30, No 6, June 1995, pp 67-78, ISSN 0362-1340 discloses a way to generate a single bias estimate based upon the ranges of values allowed or generated by a program and how these interact with thresholds in branch decisions.

In a first aspect of the present invention, a method of compiling a branch instruction of a computer program comprises the step of, for a selected pattern of preceding data within the data supplied to the branch instruction, generating a static branch predictor for the branch instruction dependent upon a respective conditional bias in a property of data representative of input data supplied in operation to the branch instruction, and generating a multi-layer static branch predictor comprising a plurality of such static branch predictors respectively selectable in dependence upon a respective pattern of preceding data.

Advantageously, by determining input data bias that influences the outcome of a branch instruction, the flow of instructions into the instruction pipeline can be selected accordingly, thereby reducing the frequency with which the pipeline is flushed.

Further respective aspects and features of the invention are defined in the appended claims.

Embodiments of the present invention will now be described by way of example with reference to the accompanying drawings, in which:
Figure 1 is a schematic diagram of a dynamic branch predictor;
Figure 2 is a schematic diagram of a multi-level dynamic branch predictor;
Figure 3 is an image for use as input data to a process;
Figure 4 is a quantised version of the image;
Figure 5 is a flow diagram of a method of branch prediction in accordance with an embodiment of the present invention.

A branch prediction method is disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

As noted above, sophisticated, two-stage dynamic branch predictors with branch decision history and multiple state machines can predict some simple periodic patterns within the branch behaviour. Such patterns may occur where the branch instruction is dependent on program logic but also, for example, on a sync signal, clock pulse or other regular pattern, such as may be found in a data packet structure.

In general, such dynamic branch predictors can predict any periodic pattern whose period of repetition is less than or equal to the length *N* of the branch decision history, provided there are *2^{N}* associated state machines. In addition they can accurately predict periodic patterns with longer periods of repetition provided every length *N* segment (overlapping with an offset of 1) is unique in such a pattern. These patterns become increasingly rare as the pattern period is extended, and cannot exceed a periodic pattern *2^{N}* decisions in length. The performance for non-unique patterns and those with a period greater than *2^{N}* decisions deteriorates rapidly as so-called 'pattern aliasing' occurs, with pattern segments in the history beginning to map one state machine to two or more subsequent behaviours.

In principle, a solution may be to increase *N*. However, it is important to weigh the cost of flushing the pipeline against the overhead of implementing an increasingly complex dynamic branch predictor. Eventually, it becomes unfeasible, or at least undesirable, to increase N beyond a certain size.

However, for a branch instruction that is dependent upon real-world data, such as for example video data, typically there is no repeating pattern. No size of *N* is sufficient for a dynamic branch predictor to accommodate a pattern with, in effect, an infinite period.

As disclosed above, embodiments of the present invention provide an elegant response to this problem by returning to the ostensibly simple static branch predictor.

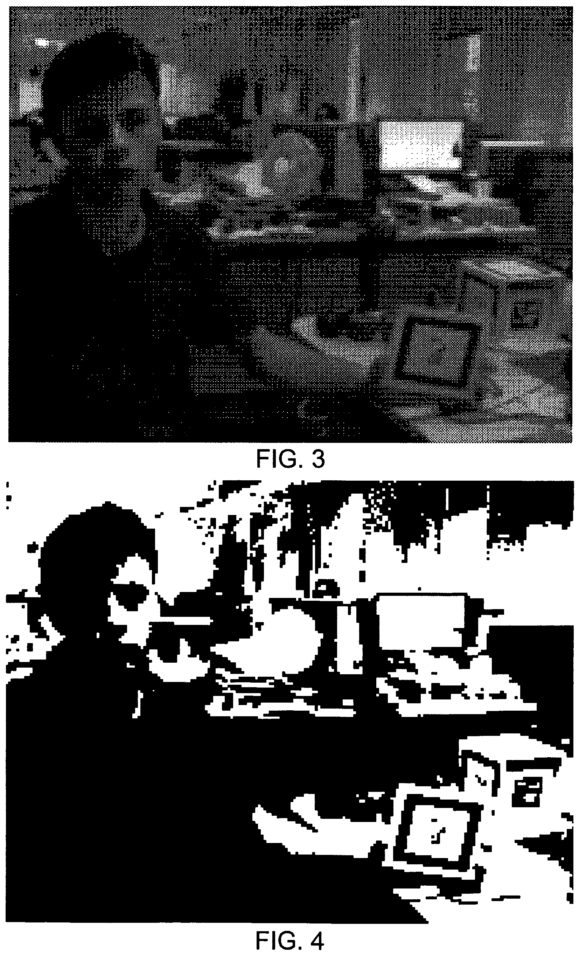

Referring now to Figures 3 and 4, an example program that uses real-world data would be a data quantisation application, where a decision is made to classify input data according to some criteria. By way of a trivial example, Figures 3 and 4 illustrate a one-bit quantisation process for a captured video image. In this instance, the relevant branch instruction may be similar to the following pseudocode:

```
  IF(Pixel(x,y)>Threshold) THEN Bit(x,y)=1 ELSE Bit(x,y)=0.
```

The branch decision is thus dependent upon the brightness of the image data.

Illustrating a bit value of 1 as a white pixel and of 0 as a black pixel, one can see that in Figure 4 there are more black pixels than white. In the above branch instruction as used on the example image with the example threshold, there is therefore a more than 50% probability that the branch will jump to the ELSE outcome. Consequently a static branch prediction hinting that the branch instruction will jump serves to reduce the frequency with which the instruction pipeline is flushed, so improving efficiency.

More generally, any deviation from an equal distribution of branch outcomes in such a branch decision can be considered a data-driven bias in the outcome of the branch decision. When such a bias is detected, a static branch prediction can be inserted within the program that predicts the average behaviour of the branch in response to such data.

The detection of such a bias can be performed in several ways.

In an embodiment of the present invention, a version of the program is compiled and executed, or alternatively is emulated, and data representative of the input data (i.e. actual input data, or test data similar to actual input data) is presented to the program in the manner applicable to its operation. A log file of the branch decisions made is then generated by the program through the inclusion of write commands within each outcome of the branch. This log file can then be analysed to determine any bias in branch decision. Alternatively, 'jump' and 'no jump' variables can be incremented within their respective set of instructions and then compared to see which is largest. Alternatively a single 'bias' variable can be incremented by one outcome and decremented by the other, with the deviation from its original value in one direction or the other being indicative of the bias. Alternatively, a compiler or other test software may be adapted to monitor such outcomes. Thus in this case the bias in the data is observed via the behaviour of the branch for which a prediction is sought.

In another embodiment of the present invention, the data representative of the input data is analysed directly, to determine a bias in the one or more qualities of the data relevant to the branch decision for which a prediction is sought. Thus, for the example of Figures 3 and 4, the mean luminance of Figure 3 is indicative of the bias with respect to a fixed brightness threshold. Clearly, more complex statistical analyses can be envisaged and may be appropriate for other types of input data.

Preferably, such evaluations would be conducted using as much representative data as is practical.

Once the nature of the data-dependent bias has been determined, the branch hint can be incorporated into the program.

In general, the hints are incorporated into the program during an interim stage of compilation. Inserting a branch prediction into final executable code would break links within the code (e.g. relative jumps, pointers etc) that were established by the compiler. Thus one approach is to compile the source code to an interim assembly stage, insert the branch prediction, and then compile the amended assembly code; at which point the compiler will generate the links within the code correctly.

A conventional compiler, as noted previously, is typically able to generate static branch predictions for certain code structures. In an embodiment of the present invention, the process of incorporating data-dependent branch predictions within a program is built into the compiler. The predictions may be obtained by the compiler in several ways. Firstly, a configuration file may list branches and predictions for the compiler to use. Alternatively or in addition, the compiler may include a user interface allowing the programmer to enter a prediction during the compilation process. Alternatively or in addition, the compiler is operable to parse comments within the source code in a similar manner to parsing the source code itself. In this latter case, an example convention may be to include a comment directly preceding a branch instruction of the form:

```
                           /* BIAS_HINT=0 */ or
                           /* BIAS_HINT=1 */
```

Other conventions and placements for such comments will be apparent to a person skilled in the art. For example, the hints could be commands or command syntax supplementary to the programming language and incorporated directly within the source code.

In response to the configuration file, user input or in-line comment, the compiler inserts an appropriate static branch prediction.

In the case where the compiler provides a step-through or test function, optionally the compiler itself can be arranged to evaluate the bias of one or more branches within the program based upon representative input data specified to it, and generate one or more respective data dependent static branch predictions accordingly, thereby simplifying the process for the programmer. The compiler can use all the available input data, or just a sample portion, though preferably enough that sample error in the bias estimate will be less than the extent of the bias itself (i.e. there is some confidence in the detected bias level).

Optionally a decision can be made as to whether to include a branch hint, according to the degree of bias found. An example rule is that if a branch shows a 60/40 bias or greater, then the branch prediction favouring the 60% outcome is included, otherwise no data-dependent branch prediction is used. In this case, the bias threshold chosen can balance any overhead involved in using the branch prediction with the predicted reduction in pipeline flushes. In addition, the threshold can reflect a level of confidence in the statistical properties of the test data or input data used.

It will be appreciated that the analysis of branch behaviour in response to input data can be more sophisticated than simply a bias to jump or not jump. Specifically, a bias that is conditional on preceding input data (and hence also on preceding branch instruction behaviour) can be envisaged. For instance, using the example of Figures 3 and 4, one sees that the majority of decisions for black or white will follow the preceding decision, since most of the black and white regions form large blocks. Thus in addition to an overall, unconditional bias, additionally one or more conditional biases can be determined. Non-limiting examples for length 1, 2 and 4 decision histories include;

| Example | Pixel/Branch History | Prediction |
|---|---|---|
| 1.1 | ■ | ■ |
| 1.2 | □ | □ |
| | | |
| 2.1 | □■ | ■ |
| 2.2 | ■□ | □ |
| | | |
| 4.1 | □□□□ | □ |
| 4.2 | ■■□□ | □ |
| 4.3 | □■□■ | □ |
| 4.4 | ■□■□ | ■ |
| 4.5 | □□■■ | ■ |
| 4.6 | ■■■■ | ■ |

In practice, these predictions would be determined empirically by determining the bias in the input data/branch outcome in the same manner as disclosed above, but segregated for each selected pattern in the history.

If for any reason a possible pattern is not evaluated, then the overall, unconditional bias may be used when this pattern is encountered. This may be the case for many 'noise' patterns where the outcome is close to 50/50.

It is notable that for the 4-event history, predictions 4.3 and 4.4 may contradict the 2-event history predictions 2.1 and 2.2, because more information about the pixel pattern can distinguish between a speckled region of an image (4.3 and 4.4) and a simple transition between two blocks of black and white (2.1, 2.2, 4.2 and 4.5).

Thus, in an embodiment of the present invention, a set of conditional static branch predictions may be generated in a fashion similar to that described above, with each static branch prediction being associated with or addressable by the binary pattern of a pixel or branch decision history. Such an arrangement can described as a multi-layer static branch predictor.

Notably, since any pattern in the history will only have a single, static, hint bit associated with it, the length N of the history can be appreciably longer than that of an equivalent dynamic predictor before using an equivalent amount of memory. In addition, as noted above potentially not every permutation of the N bits of the history need be associated with its own static predictor. Moreover, potentially one need only include those predictions that deviate from the unconditional (overall) bias of the branch instruction.

It will be appreciated therefore that such a multi-level static branch predictor can provide a more powerful model of the input data statistics than the single, unconditional bias of the single data-dependent static branch prediction alone.

In principle, elements of the above approach can also be applied to the initialisation of dynamic branch predictors. Firstly, the initial state of a simple dynamic branch predictor (as shown in Figure 1) can be set according to the overall bias of the input data / branch instruction, so as to reduce the odds of an initial error. In the four-state dynamic branch predictor of Figure 1, the initial state chosen could optionally be a function of the degree of bias (i.e. for a small bias use state 11 or 12, whereas for a large bias use state 10 or 13).

Likewise a multi-level dynamic branch predictor such as that shown in Figure 2 can also be initialised so that the initial state of each dynamic branch predictor reflects the conditional bias associated with the relevant input history pattern, thereby improving the chances of a correct initial prediction for each of the 2^{N} dynamic branch predictors employed, and thereby potentially avoiding 2^{N} unnecessary flushes of the instruction pipeline.

In both cases, in effect the dynamic branch predictors are being bootstrapped by the static branch prediction.

The above embodiments serve to modify the flow of a computer program in response to input data bias, so as to reduce the frequency with which the instruction pipeline is flushed. However, referring back to the example of:

```
  IF(Pixel(x,y)>Threshold) THEN Bit(x,y)=1 ELSE Bit(x,y)=0.
```

It will be appreciated that instead of using a branch prediction dependent upon a bias in the data, a potential alternative is to alter the code itself in dependence upon the overall bias:

```
  IF(Pixel(x,y)<=Threshold) THEN Bit(x,y)=0 ELSE Bit(x,y)=1.
```

Now, referring to the original example of Figures 3 and 4, the THEN outcome is more frequent than jumping to the ELSE outcome, and so a branch prediction appears unnecessary.

However, this approach is less reliable in practice, as the code order within the source code does not necessarily reflect the code order in the executable code (and hence the default code order in the instruction pipeline). Compilers optimise code to satisfy numerous constraints, such a code size, memory usage, execution speed, etc. Consequently, the order of the source code cannot be reliably used as an indicator of branch outcome in a conventional compiler. Moreover, in some processor architectures there is a penalty even for unhinted branches that are not taken due to multi-branch prediction methods that require branch hints to evaluate more distant future instructions. This consideration becomes more acute as pipelines get longer.

Nevertheless, in an embodiment of the present invention a compiler is operable to parse comments within the source code as noted previously. In this case, an example convention may be to include a comment directly preceding a branch instruction of the form

```
                           /* PRESERVE_ORDER=1 */
```

Thereby explicitly instructing the compiler to preserve the order of branch instruction outcomes found in the source code. Other conventions and placements for such comments, as well as the alternatives of lists, user inputs or self-tests as outlined above, can also be used to determine whether to preserve code order.

The input data referred to herein is typically real-world data, but may be data in turn directly or indirectly dependent upon real-world data, or may be data that is otherwise effectively aperiodic. Such data may typically be derived or generated within the program itself and passed between functions as arguments. Consequently at compilation there may be functions whose behaviour is data dependent but for which dynamic branch predictors are unsuitable. For example, in the case where a variable '*number*' takes a sequence of aperiodic values:

```
                      function(int number)
                       {
                         switch(number)
                         {
                              case 0:
                                     call_function_zero();
                                     break;
                              case 1:
                                     call_function_one();
                                     break;
                                case 2:
                                     call_function_two();
                                     break;
                           }
                       }
```

Such code would be compiled as a jump table and function as follows:

| jump table: | function(int number): |
|---|---|
| 0: call_function_zero | load register zero with jump_table[number] |
| 1: call_function_one | jump to register zero |
| 2: call_function_two | return from subroutine |

It will be understood that during compilation the compiler cannot determine from the code itself which route will be taken. Typically therefore on compilation either no branch prediction would be provided, or a dynamic branch predictor would be provided that would then perform poorly in practice due to the nature of the variable *number.*

However, if it was determined that *function_one* is the most common option (i.e. there is a bias to select this function), then a static hint to this effect can be provided to the processor.

Similarly, if there is any form of conditional bias (for example, that following the calling of function 1, there is a greater chance of calling function zero next, even if there is no pattern per se) then a multi-level static branch predictor any also be usefully employed.

Thus embodiments of the present invention are also suitable to provide static branch predictions for branch instructions utilising internally derived or generated input data (e.g. variable *number* in the above example) that in operation exhibits bias.

The final compiled computer program will contain computer-implementable instructions including one or more branch hints whose values are dependent upon a property of the input data relevant to the respective branch instruction. It will be appreciated that such branch hints would not be found in a conventional computer program product.

This compiled computer program can then be stored in the form of a computer program product, which may be a data carrier such as a floppy disk, optical disk, hard disk, PROM, RAM, flash memory or any combination of these or other storage media, that comprises the processor implementable instructions of the compiled computer program, including the static branch hints.

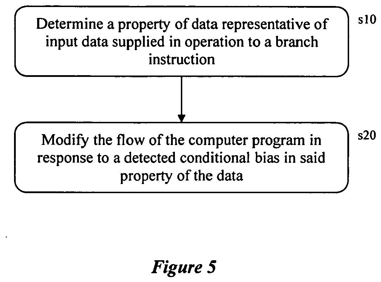

Referring now to Figure 5, in a summary embodiment a method of branch prediction comprises:
in a first step s10, determining a property of data representative of input data supplied in operation to the branch instruction, and
in a second step s20, modifying the flow of the computer program in response to a detected conditional bias in said property of the data.

It will be apparent to a person skilled in the art that variations in the above method corresponding to various embodiments described above are considered within the scope of the present invention, including but not limited to:
i. modifying the program flow by insertion of a branch prediction itself dependent upon said detected conditional bias of said property of the data;
ii. modifying the program flow by stipulating the order of compiled instructions in accordance with a detected overall bias of said property of the data;
iii. detecting bias in a property of the data by observation of branch behaviour, either through the generation of logs/bias variables or through tracking mechanisms of a suitably adapted compiler; and
iv. detecting bias in a property of the data by direct analysis of the data.

Finally, it will be appreciated that in embodiments of the present invention, elements of the branch prediction method will be implemented in a computer, for example in the form of a suitably adapted compiler.

Thus the required adaptation to existing parts of a conventional product may itself be implemented in the form of a computer program product comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the conventional product.

## Claims

1. A method of compiling a branch instruction of a computer program, the method comprising the step of:
for a selected pattern of preceding data within the data supplied to the branch instruction,
generating a static branch prediction for the branch instruction dependent upon a respective conditional bias in a property of data representative of input data supplied in operation to the branch instruction; and
generating a multi-layer static branch predictor comprising a plurality of such static branch predictions respectively selectable in dependence upon a respective pattern of preceding data.

2. A method according to claim 1, comprising the step of:
inserting the static branch prediction during an interim stage of compilation of the computer program.

3. A method according to claim or claim 2, in which the detected conditional bias is based upon a history of the input data.

4. A method according to claim 1 comprising the step of generating a multi-level dynamic branch predictor for the branch instruction whose initial states are correspondingly dependent upon said plurality of static branch predictions.

5. A method according to any one of the preceding claims, in which the step of determining a property of data representative of input data supplied in operation to the computer program comprises
evaluating bias in the outcome of the branch instruction whilst the computer program processes at least a sample portion of said data.

6. A method according to any one of claims 1 to 4, in which the step of determining a property of data representative of input data supplied in operation to the computer program comprises
evaluating bias in the distribution of values of a quality of the input data relevant to the branch instruction for which the static branch prediction is to be generated.

7. A method according to claim 1 comprising the step of importing predictions dependent upon a respective conditional bias from one or more selected from the list consisting of:
i. a list of branch predictions;
ii. hints inserted within the source code; and
iii. a user input.

8. A method according to claim 1, comprising the step of evaluating bias in the outcome of a branch instruction whilst the compiled computer program processes said data, and to then to fully or partially recompile the computer program incorporating a static branch prediction dependent upon the evaluated bias.

9. A computer program having computer executable instructions adapted to cause a computer system to implement the steps of any one of claims 1 to 8.

## Patentansprüche

1. Verfahren zum Kompilieren einer Sprunganweisung eines Computerprogramms, wobei das Verfahren den folgenden Schritt umfasst:
für ein ausgewähltes Muster vorausgehender Daten innerhalb der Daten, die an die Sprunganweisung geliefert werden,
Erzeugen einer statischen Sprungvorhersage für die Sprunganweisung, abhängig von einer jeweiligen bedingten Vorspannung in einer Eigenschaft der Daten, die für Eingabedaten repräsentativ sind, die im Betrieb an die Sprunganweisung geliefert werden; und
Erzeugen eines mehrschichtigen statischen Sprungvorhersagers, der eine Vielzahl derartiger statischer Sprungvorhersagen umfasst, die in Abhängigkeit von einem jeweiligen Muster vorausgehender Daten jeweils auswählbar sind.

2. Verfahren nach Anspruch 1, das folgenden Schritt umfasst:
Einfügen der statischen Sprungvorhersage während einer Interimphase der Kompilierung des Computerprogramms.

3. Verfahren nach Anspruch oder Anspruch 2, bei dem die detektierte bedingte Vorspannung auf einer Historie der Eingabedaten basiert.

4. Verfahren nach Anspruch 1, das einen Schritt des Erzeugens eines mehrstufigen dynamischen Sprungvorhersagers für die Sprunganweisung umfasst, dessen anfängliche Zustände entsprechend von der Vielzahl statischer Sprungvorhersagen abhängig sind.

5. Verfahren nach einem der vorhergehenden Ansprüche, bei dem der Schritt des Bestimmens einer Eigenschaft von Daten, die für Eingabedaten repräsentativ sind, die im Betrieb zum Computerprogramm geliefert werden, Folgendes umfasst
Auswerten der Vorspannung im Ergebnis der Sprunganweisung, während das Computerprogramm mindestens einen Probeabschnitt der Daten verarbeitet.

6. Verfahren nach einem der Ansprüche 1 bis 4, bei dem der Schritt des Bestimmens einer Eigenschaft von Daten, die für Eingabedaten repräsentativ sind, die im Betrieb zum Computerprogramm geliefert werden, Folgendes umfasst
Auswerten einer Vorspannung in der Verteilung von Werten einer Qualität der Eingabedaten, die für die Sprunganweisung relevant sind, für die die statische Sprungvorhersage erzeugt werden soll.

7. Verfahren nach Anspruch 1, das den Schritt des Importierens von Vorhersagen in Abhängigkeit von einer jeweiligen bedingten Vorspannung von einem oder mehreren aus der Liste umfasst, die aus Folgendem besteht:
i. einer Liste von Sprungvorhersagen;
ii. in den Quellcode eingefügten Hinweisen und
iii. einer Benutzereingabe.

8. Verfahren nach Anspruch 1, das den Schritt des Auswertens einer Vorspannung im Ergebnis einer Sprunganweisung umfasst, während das kompilierte Computerprogramm die Daten verarbeitet, und um dann das Computerprogramm vollständig oder teilweise neu zu kompilieren, wobei in Abhängigkeit von der ausgewerteten Vorspannung eine statische Sprungvorhersage aufgenommen wird.

9. Computerprogramm, das computerausführbare Anweisungen aufweist, die angepasst sind zu bewirken, dass ein Computersystem die Schritte eines der Ansprüche 1 bis 8 implementiert.

## Revendications

1. Procédé de compilation d'une instruction de branche d'un programme informatique, le procédé comprenant les étapes suivantes :
pour un motif sélectionné de données précédentes des données fournies à l'instruction de branche,
génération d'une prédiction de branche statique pour l'instruction de branche en fonction d'un biais conditionnel respectif dans une propriété de données représentative de données d'entrée fournies en fonctionnement à l'instruction de branche ; et
génération d'un prédicteur de branche statique multicouche comprenant une pluralité de telles prédictions de branche statiques pouvant être respectivement sélectionnées en fonction d'un motif respectif de données précédentes.

2. Procédé selon la revendication 1, comprenant l'étape suivante :
insertion de la prédiction de branche statique pendant une étape intermédiaire de compilation du programme informatique.

3. Procédé selon la revendication ou la revendication 2, dans lequel le biais conditionnel détecté est fonction d'un historique des données d'entrée.

4. Procédé selon la revendication 1, comprenant l'étape de génération d'un prédicteur de branche dynamique multi-niveau pour l'instruction de branche dont les états initiaux dépendent de manière correspondante de ladite pluralité de prédictions de branche statiques.

5. Procédé selon l'une quelconque des revendications précédentes, dans lequel l'étape de détermination d'une propriété de données représentative de données d'entrée fournies en fonctionnement au programme informatique comprend :
l'évaluation d'un biais dans le résultat de l'instruction de branche, tandis que le programme informatique traite au moins une partie échantillon desdites données.

6. Procédé selon l'une quelconque des revendications 1 à 4, dans lequel l'étape de détermination d'une propriété de données représentative de données d'entrée fournies en fonctionnement au programme informatique comprend :
l'évaluation d'un biais dans la répartition de valeurs d'une qualité des données d'entrée concernant l'instruction de branche pour laquelle la prédiction de branche statique doit être générée.

7. Procédé selon la revendication 1, comprenant l'étape d'importation de prédications fonction d'un biais conditionnel respectif depuis un ou plusieurs endroits sélectionnés parmi la liste consistant en :
i. une liste de prédictions de branche ;
ii. des indices insérés dans le code source ; et
iii. une entrée utilisateur.

8. Procédé selon la revendication 1, comprenant l'étape d'évaluation d'un biais dans le résultat d'une l'instruction de branche tandis que le programme informatique compilé traite lesdites données, pour ensuite recompiler complètement ou partiellement le programme informatique en incorporant une prédiction de branche statique fonction du biais évalué.

9. Programme informatique ayant des instructions exécutables par ordinateur adaptées pour amener un système informatique à mettre en oeuvre les étapes selon l'une quelconque des revendications 1 à 8.
